Europäisches Patentamt

European Patent Office

Office européen des brevets

(19)

(11) **EP 0 811 949 A2**

(12) **EUROPEAN PATENT APPLICATION**

(43) Date of publication:
**10.12.1997 Bulletin 1997/50**

(51) Int Cl.6: **G06K 15/02**, G06K 15/10, B41J 29/42

(21) Application number: **97303874.8**

(22) Date of filing: **05.06.1997**

(84) Designated Contracting States:
**AT BE CH DE DK ES FI FR GB GR IE IT LI LU MC NL PT SE**

(30) Priority: **05.06.1996 KR 9620059**

(71) Applicant: **Samsung Electronics Co., Ltd.**
**Suwon City, Kyungki-do (KR)**

(72) Inventor: **Ju, Young-Bok**
**Bundang-gu, Seongnam-City, Kyungki-do (KR)**

(74) Representative: **Tunstall, Christopher Stephen**
**Dibb Lupton Alsop,**
**Fountain Precinct**
**Balm Green, Sheffield S1 1RZ (GB)**

(54) **Reduced size printing method**

(57) An operating method for a printer is described, the printer being loaded with one or more sheets of paper. First, the width of the loaded paper is detected. Then, printing data is received from a host and the maximum line length of the printing data is detected. The printing data is printed at a reduced size if the maximum line length is greater than the paper width.

FIG. 5

## Description

### BACKGROUND OF THE INVENTION

The present invention relates to an image forming device adopting a serial printing method, and more particularly to a method and device for printing a reduced image.

Generally, an ink jet printer is one kind of serial printer in which the maximum printing length of a line is preset according to the paper with which the printer is loaded. The printer calculates the maximum number of printing dots or pixels corresponding to the maximum printing width of the loaded paper. If the number of printing dots to be printed exceeds the maximum number of printing dots, the serial printer performs one of the following operations. Either it executes a line feed and prints the extra printing data after the line feed or it ignores the extra printing data, which is therefore not printed.

In either case, the printed image is different from the expected image as the extra printing data is printed in the next line or cancelled. This inconvenience can be avoided by printing the data at a reduced size without changing the picture image if the printing data exceeds the maximum printing width. One kind of printer using this technique is the BJ-33 made by Canon. In this printer, the size of printing data transferred to the serial printer is reduced by operating a paper form converting function key. For example, the size of printing data from a host is reduced by the ratio of A3 to B4 by operation of the corresponding function key. This is inconvenient of requiring the printing width to be manually set in advance using a paper form converting function key.

It is an object of the present invention to provide an improved reduced size printing method.

### SUMMARY OF THE INVENTION

According to the present invention, the operating method of a printer which is loaded with one or more sheets of paper comprises detecting the width of the loaded paper, receiving printing data from a host, detecting the maximum line length of the said printing data and printing the said printing data at a reduced size if the said maximum line length is greater than the paper width.

The width of the paper may be detected by moving a reflective optical sensor across the paper and sensing the light reflected by the paper. For example, the optical sensor may have an emitting element and a receiving element and be moved from a home position to a remote position, with light emitted by the emitting element and reflected to the receiving element being sensed to detect the width of the paper.

Preferably, a reduction rate is obtained by dividing the paper width by the said maximum line length and converting the printing data to reduced image data according to that reduction rate.

The method my include detecting whether a reduction mode is set and printing the printing data normally if the reduction mode is not set.

The present invention also extends to a printer which is loaded with one or more sheets of paper and comprises means for detecting the width of the loaded paper, means for receiving and storing printing data from a host and means for detecting the maximum line length of the said printing data and printing the said printing data at a reduced size if the said maximum line length is greater than the paper width.

### BRIEF DESCRIPTION OF THE DRAWINGS

The present invention will now be described by way of example with reference to the accompanying drawings in which:

FIG.1 is a block diagram of a serial printer;
FIG.2 is a front exploded view of the printing mechanism of FIG.1;
FIG.3 is a sectional view of a printing mechanism illustrating the operation of a reflective optical sensor;
FIG.4 is another diagram of the operation of a reflective optical sensor; and
FIG.5 is a flow chart illustrating the reduced size printing method of the present invention.

### DETAILED DESCRIPTION OF THE PREFERRED EMBODIMENT

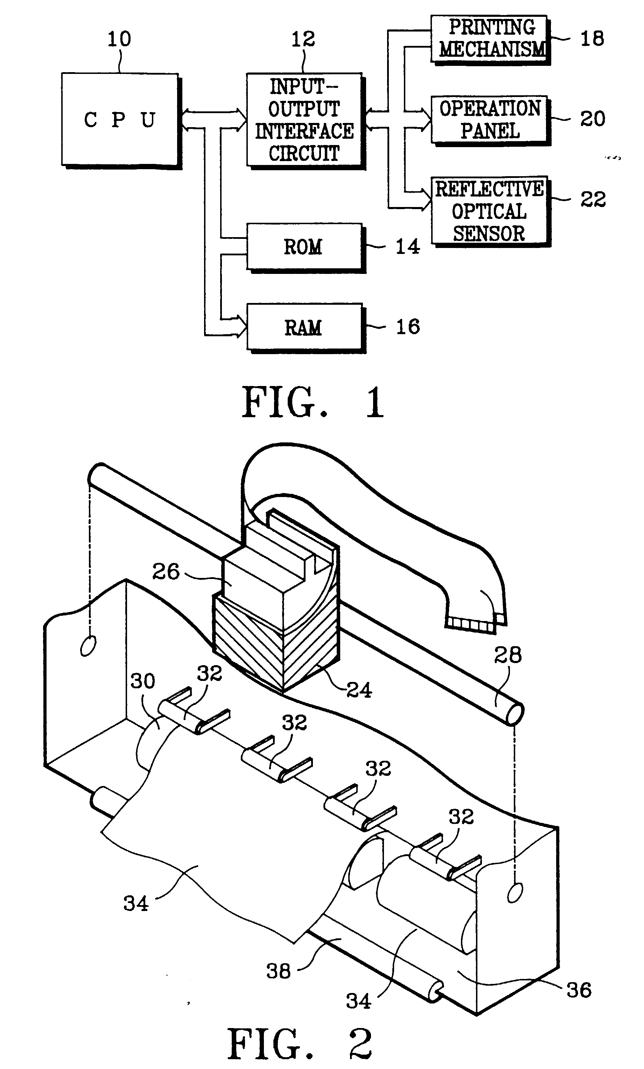

Referring to FIG.1, a central processing unit ('CPU') 10 controls an ink jet recording device by executing a program stored in ROM 14 and using an input/output interface 12. The ROM 14 stores an operating program and a variety of initial data. RAM 16 temporarily stores data according to the operation of CPU 10. An input/output interface 12 interfaces signals transferred between CPU 10 and input/output devices such as an operation panel 20, a printing mechanism 18 and a reflective optical sensor 22.

The operation panel 20 comprises a number of keys which give instructions to the CPU 10 and a display for displaying data under the control of the CPU 10. The printing mechanism 18 comprises a motor driver, a carrier moving motor, a paper moving motor, a head cradle, a head cartridge and a head driver, and prints input data on paper under the control of the CPU 10. The reflective optical sensor 22 is installed on the head cradle of the printing mechanism 18.

Referring to FIG.2, a feed roller 30 moves loaded paper 34 to a frame base assembly 36. A roller friction array 32 is installed on the feed roller 30. The roller friction array 32 presses against the paper 34 and prevents it from becoming loose when moving to the frame base assembly 36. The paper 34 is forwarded by a forward roller 38 of the frame base assembly 36. The carrier assembly is located vertically above the frame base assembly 36. The carrier assembly comprises the head cradle 24 having a built-in head cartridge 26. The head cradle 24 is moved along a carrier shaft 28 by a carrier moving motor, not illustrated in the figure. The head cartridge 26 built in the head cradle 24 comprises an ink barrel and an ink injection head.

The injection head located on the bottom of the head cradle 24 contacts lightly the frame base assembly 36. Accordingly, the head prints data onto the paper moved to the frame base assembly 36 by injection of ink. The reflective optical sensor 22 is on the bottom of the head cradle 24. The reflective optical sensor 22 comprises a luminous element emitting light onto the paper 34 or the frame base assembly 36 and a receiver receiving light reflected from the paper 34.

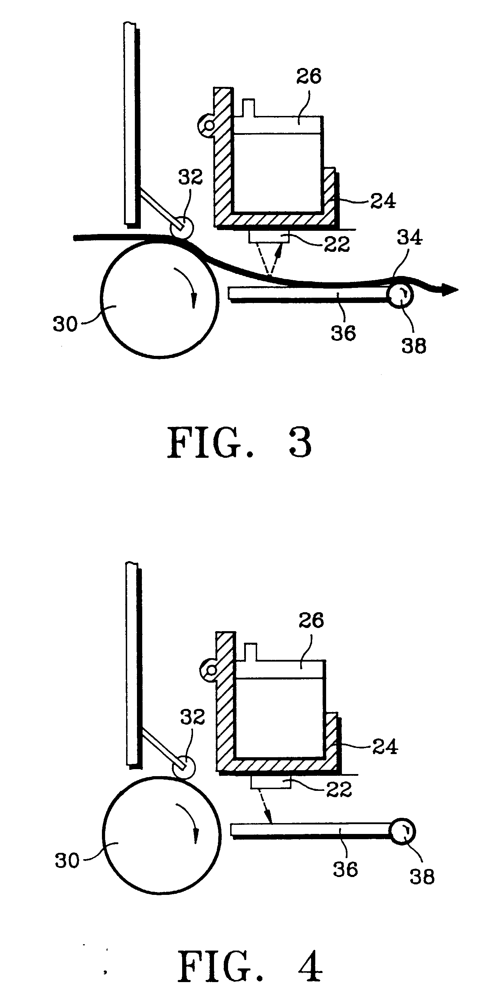

Referring to FIG.3, the luminous element of the reflective optical sensor 22 emits light and the receiver receives reflected light from the paper 34, and accordingly the reflective optical sensor senses the existence of paper 34 at the position of the head cradle 24.

Referring to FIG. 4, the luminous element of the reflective optical sensor 22 emits light onto the frame base assembly 36 and light is not reflected, but absorbed into the frame base assembly 36 as it is made of dark coloured synthetic resin, e.g. black, and accordingly the sensor senses the absence of paper 34.

The head cradle 24 equipped with the reflective optical sensor is moved along the carrier shaft 28. The detection of the paper width by the reflective optical sensor is as follows. The CPU 10 loads the paper 34 to the printing position and moves the head cradle 24 to home position by driving the carriage moving motor. The luminous element of the reflective optical sensor 22 begins to emit light onto the paper and the reflected light is received by the receiver. Receiving light, the CPU 10 moves the head cradle 24 horizontally from the home position to the end of the paper and counts the number of dots to be printed while receiving reflected light as the head cradle is moved. The CPU 10 obtains the counted value corresponding to paper width when light is no longer reflected because the head cradle 24 is moved to a position at which there is no paper. Then the CPU 10 then detects the paper width by obtaining the counted value.

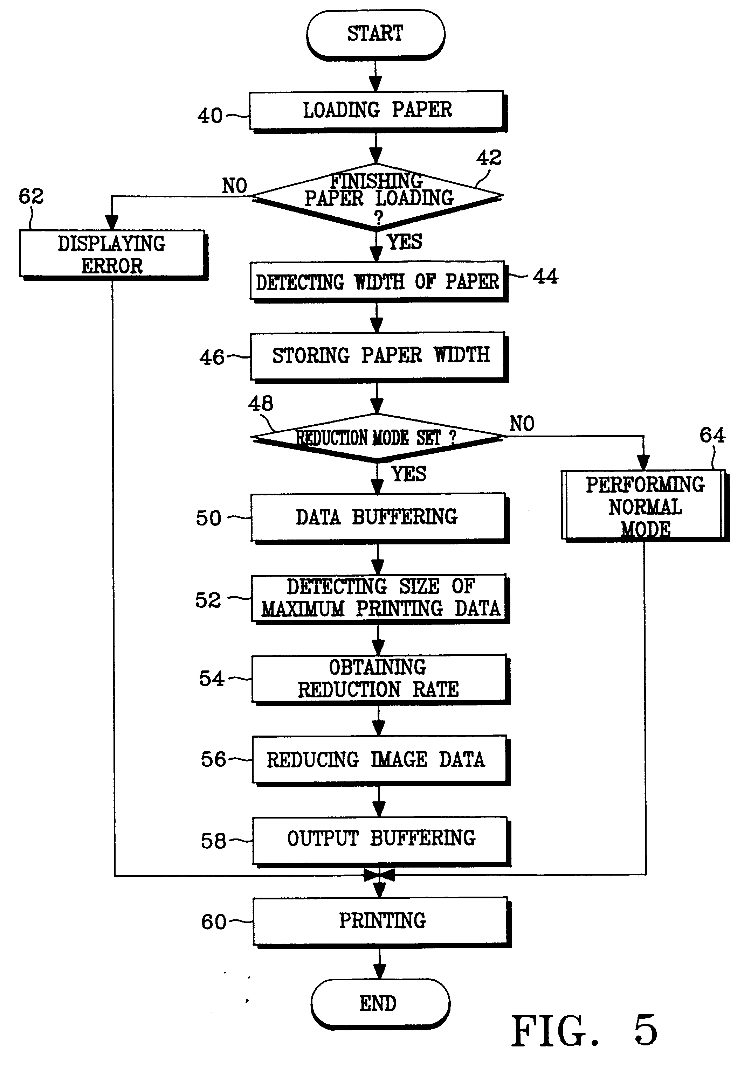

Referring to FIG.5, the CPU 10 initially applies power. Afterwards, the CPU 10 picks up and loads the paper 34 by driving a paper moving motor in step 40 and checks whether the paper is loaded by checking for an input being present in the reflective optical sensor 22 in step 42. When the paper is loaded, the emitted light is reflected on the paper 34 and received by the reflective optical sensor 22. No light is reflected if the paper 34 is absent or jammed. Accordingly, the CPU 10 performs step 44 when the reflected light is present and performs step 62 when the reflected lighted is not present.

In step 44, the CPU 10 detects the paper width by using the reflective optical sensor 22. After detecting the paper width, the CPU 10 stores the detected paper width in the RAM 16 in step 46. After storing the paper width, the CPU 10 detects whether a reduction mode is set by a function key in step 48. The function key for setting automatic reduction printing is operated at this time. The CPU 10 detects printing data from the host and operates an input buffer when the printing data is transferred in step 50. After buffering the printing data, the CPU 10 detects the number of columns per line from the printing data in step 52, and stores the maximum number of columns detected in a register.

The maximum number of columns represents the longest line in one page if the printing data equals the volume of one page. The maximum number of columns is proportional to the maximum line length of the printing data. After detecting the maximum line length, the CPU 10 reads the paper width stored in the RAM 16 and the maximum line length stored in the register in step 54, and calculates from them a reduction rate. The formula for calculating the reduction rate is as follows:

$$Reduction\ Rate =$$

$$Paper\ Width/Maximum\ Line\ Length\ x\ 100\ \%$$

After obtaining the reduction rate, the CPU 10 reduces the buffered data according to the reduction rate in step 56. The reduction may be performed by using a font ROM storing font images, where an image is formed by means of obtaining a letter reduced as per the reduction rate. Also, image sorting may be performed according to the reduction rate of a reduction program. After reduction, the CPU 10 buffers the image into an output buffer in step 58. After buffering, the CPU 10 drives the printing mechanism 18 to print a picture corresponding to the buffered data and the program execution is terminated when the printing operation is finished.

On the other hand, the CPU 10 reads data from the RAM 16 to display an error in step 62 and sends the data to the operation panel 20 to be displayed. After displaying the error, the program execution is terminated. Alternatively, the CPU 10 performs a normal printing operation in step 64.

Accordingly, the present invention solves the problem of loss of printing data because of the printing data line length transferred from the host being larger than the paper width. It also improves convenience in printing automatically at a reduced size according to the sizes of the data and loaded paper, without requiring the setting of a reduction mode manually.

## Claims

1. An operating method of a printer which is loaded with one or more sheets of paper comprising detecting the width of the loaded paper, receiving printing data from a host, detecting the maximum line length of the said printing data and printing the said printing data at a reduced size if the said maximum line length is greater than the paper width.

2. An operating method according to claim 1 in which the width of the paper is detected by moving a reflective optical sensor across the paper and sensing the light reflected by the paper.

3. An operating method according to claim 2 in which the optical sensor has an emitting element and a receiving element and is moved from a home position to a remote position and light emitted by the emitting element and reflected to the receiving element is sensed to detect the width of the paper.

4. An operating method according to any preceding claim comprising obtaining a reduction rate by dividing the paper width by the said maximum line length and converting the printing data to reduced image data according to that reduction rate.

5. An operating method according to any preceding claim comprising detecting whether a reduction mode is set and printing the printing data normally if the reduction mode is not set.

6. A printer which is loaded with one or more sheets of paper and comprises means for detecting the width of the loaded paper, means for receiving and storing printing data from a host and means for detecting the maximum line length of the said printing data and printing the said printing data at a reduced size if the said maximum line length is greater than the paper width.

7. An operating method of a printer as described with reference to and/or as illustrated in the accompanying drawings.

8. A printer as described with reference to and/or as illustrated in the accompanying drawings.

10

12

PRINTING
MECHANISM — 18

C P U

INPUT-
OUTPUT
INTERFACE
CIRCUIT

OPERATION
PANEL — 20

REFLECTIVE
OPTICAL
SENSOR — 22

ROM — 14

RAM — 16

# FIG. 1

26

24

28

30  32

32

32

32

34

38

34

36

# FIG. 2

# FIG. 3

# FIG. 4

START

40 — LOADING PAPER

42
FINISHING PAPER LOADING ?
NO
YES

62 — DISPLAYING ERROR

44 DETECTING WIDTH OF PAPER

46 — STORING PAPER WIDTH

48
REDUCTION MODE SET ?
NO
YES

64 PERFORMING NORMAL MODE

50 — DATA BUFFERING

52 — DETECTING SIZE OF MAXIMUM PRINTING DATA

54 — OBTAINING REDUCTION RATE

56 — REDUCING IMAGE DATA

58 — OUTPUT BUFFERING

60 — PRINTING

END

FIG. 5